# EUROPEAN PATENT APPLICATION

(11) **EP 1 993 186 A1**
(43) Date of publication of application: **19.11.2008**
(21) Application number: 07009654.0
(22) Date of filing: 15.05.2007
(51) Int. Cl.: H02J 7/35, H02J 7/00

(54) **Solar power system**

(71) Applicant: Fan, Chen-Yueh, Taipei (TW)
(72) Inventor: Fan, Chen-Yueh, Taipei (TW)
(74) Representative: Schildberg, Peter

(57) **Abstract**

A solar power system uses a solar panel to convert light energy to electricity for charging a battery through a photo sensor. The photo sensor uses a switching unit to control whether the battery can be charged or discharge to a load. The battery further connects to a sensing and protecting circuit and an over-discharge protecting circuit. The sensing and protecting circuit protects the battery from being over-charged. The over-discharge protecting circuit stops the discharging of the battery when the output voltage of the battery is lower than a low threshold.

## Description

### 1. Field of the Invention

The present invention relates to a solar power system, and more particularly to a solar power system that uses a control device to automatically senses light intensity and protects the battery form being over-charged and over-discharged.

### 2. Description of Related Art

As the petroleum consumes, developing other alternate energy has come into public notice. Solar power is regarded as the economical and low- pollution energy so that the applications of the solar power are getting seriously considered. One of the applications is the solar power system that uses a solar panel to collect light for generating heat or electricity. Although the solar power system is a very common application, the solar power system lacks an means for effectively controlling and managing the electricity.

The objective of the present invention is to provide a solar power system that can automatically detects an output voltage of a battery to protect the battery from being over-charged and discharged when the battery is charged or when the battery supplies the output voltage to a load.

To achieve the objective the solar power system comprising:
a solar module having a solar panel to convert outdoor light to electricity and generating an output voltage, a DC/DC converter to convert the electricity to a DC voltage, and a battery charged by the DC voltage and generating an output voltage;
a photo sensor connected to the solar panel to detect whether the output voltage of the solar panel is higher than a normal level and determine whether the outdoor light is sufficient for operation of the solar panel;
a switching unit controlled by the photo sensor and comprising a first switch for selectively connecting the battery to the solar panel or an external power supply when the battery is charged by the solar panel or the external power supply; and comprising a second switch for connecting the battery to a load when the battery supplies its output voltage to the load;
a sensing and protecting circuit connected to battery and a control terminal of an electronic switch that is connected between the external power supply and the switching unit, the sensing and protecting circuit sensing whether or not the battery is over-charged by the external power supply and disconnecting the battery from the external power supply when the battery is over-charged; and
an over-discharging protecting circuit connected to the battery and comprising a limiting switch, the limiting switch being connected between the battery and the load, the over-discharging protecting circuit stopping the battery from supplying power to the load when the output voltage of the battery is lower than a low threshold.

Other objectives, advantages and novel features of the invention will become more apparent from the following detailed description when taken in conjunction with the accompanying drawings.
In the drawings:
Fig. 1 is a circuit diagram of a solar power system in accordance with the present invention; and
Fig. 2 is a circuit diagram of a DC/DC converter of the solar power system in accordance with the present invention.

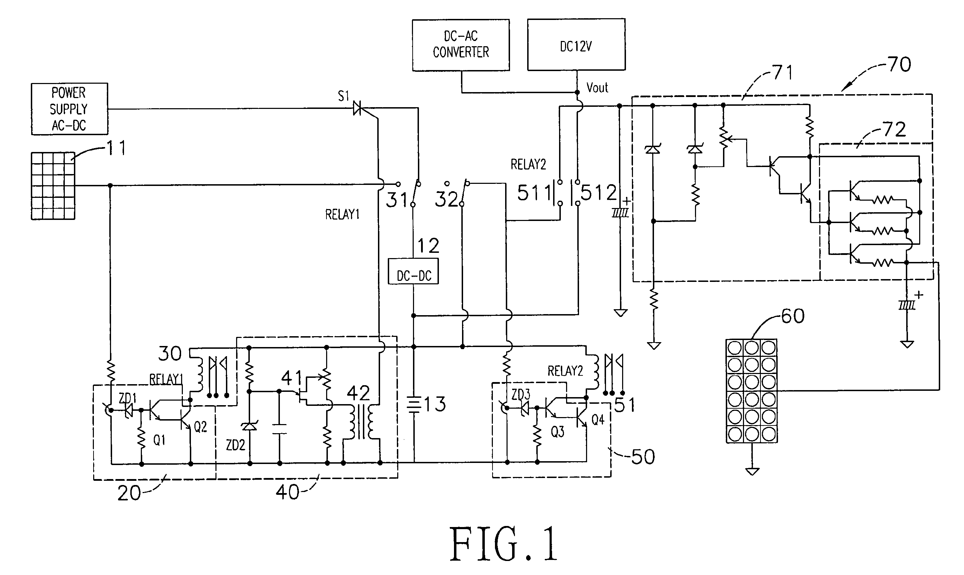

With reference to Fig. 1, the solar power system comprises a solar power module, a photo sensor (20), a switching unit (30), a sensing and protecting circuit (40) and an over-discharge protecting circuit (50). The solar power system provides power to a load through a driving unit (70). The load in this embodiment is an LED lighting module (60).

The solar power module comprises a solar panel (11), a DC/DC converter (12) and at least one battery (13). After the solar panel (11) absorbs light energy and converts to electricity, the DC/DC converter (12) converts the electricity to a DC current voltage for charging the battery (13) through the switching unit (30).

The photo sensor (20) comprises a first zener diode (ZD1), a first transistor (Q1) and a second transistor (Q2). The base of the first transistor (Q1) is connected to the solar panel (11) through the first zener diode (ZD 1). The emitter and collector of the first transistor (Q1) are respectively connected to the base and the collector of the second transistor (Q2). The collector of the second transistor (Q2) is further connected to the switching unit (30).

The switching unit (30) comprises a first relay with two switches (31)(32) and a coil. Each switch (31)(32) has a common terminal, a normal-open node and a normal-close node. The coil of the first relay is connected to the collector of the second transistor (Q2) of the photo sensor (20). The common terminal of the first switch (13) is connected to the DC/DC converter (12). The normal-open node of the first switch (31) connects to the solar panel (11) while the normal-close node connects to an external power supply through an electronic switch. The electronic switch is a silicon-controlled rectifier (S1) with a control gate, an anode and a cathode. The power supply is an AC to DC power supply that converts an AC voltage to a DC voltage. The common terminal of the second switch (32) connects to an output terminal of the battery (13). The normal-close node of the second switch (32) is connected to the driving unit (70) through a limiting switch (51). The normal-open node of the second switch (32) is left floating or unconnected.

The sensing and protecting circuit (40) comprises a power transistor (41) and a transformer (42). The gate of the power transistor (41) is connected to a node where a first resistor (R1) and a second zener diode (ZD2) are connected together. The other terminals of the first resistor (R1) and the second zener diode (ZD2) are connected to the battery (13). The primary side of the transformer (42) is connected to the drain of the power transistor (41) while the secondary side is connected to the control gate of the electronic switch (S1). The anode of the electronice switch (S1) is connected to the external power supply.

The over-discharge protecting circuit (50) comprises a third transistor (Q3), a fourth transistor (Q4), a third zener diode (ZD3) and the limiting switch (51). The base of the third transistor (Q3) is connected to the battery (13) through the third zener diode (ZD3). The collector and emitter of the third zener diode (ZD3) are connected to the fourth transistor (Q4). The collector of the fourth transistor (Q4) is connected to the limiting switch (51). The limiting switch (51) is a second relay with a third switch (511), a fourth switch (512) and a coil. The coil of the second relay is connected to the fourth transistor (Q4). The third switch (511) is connected to the battery (13) through the second switch (32) of the switching unit (30). The fourth switch (512) is connected between the battery (13) and a power output node (Vout).

The driving unit (70) has an input terminal connected to the battery (13) through the limiting switch (51). The driving unit (70) comprises a driving circuit (71) and a constant current circuit (72). In this embodiment, the constant current circuit (72) with an output terminal connects to LED lighting module (60) to provide a stable output current to the LED lighting module (60).

Because the photo sensor (20) is connected to the solar panel (10), the photo sensor (20) can sense whether the output voltage of the solar panel is higher than a normal level such as 6.2 volts to determine whether or not the intensity of the outdoor light is high enough for operation of the solar panel (11). If the light is sufficient, the first zener diode (ZD1) of the photo sensor (20) is turned to excite the coil of the first relay of the switching unit (30), which causes the switches (31)(32) to be switched to the normal-open nodes from normal-close nodes. The DC/DC converter (12) is connected to the solar panel (11) and can convert the electricity output from the solar panel (11) to the DC voltage. The DC voltage is used to charge the battery (13). Since the second switch (32) disconnects the driving unit (70) from the battery (13), the driving unit (70) can not obtain input power and accordingly the LED lighting module (60) will not operate.

As the outdoor sunlight is getting dark, the output voltage of the solar panel (11) is lower than the normal level and the first zener diode (ZD1) is turned off. The common terminals of two switches (31)(32) return to the normal-close nodes. The DC/DC converter (12) is connected to the cathode of the electronic switch (S1) through the first switch (31). When the output voltage of the battery does not exceed a setting level such as 12 volts, the second zener diode (ZD2) of the sensing and the protecting circuit (40) will not be turned on but the power transistor (41) is in a conducted status. The transformer (42) outputs a trigger voltage to he control gate of the electronic switch (S1) to turn on the electronic switch (S1). Thus, the AC to DC power supply can charge the battery (13) through the DC/DC converter (12). When the output voltage of the battery (13) is higher than the setting level, the second zener diode (ZD2) of the sensing and protecting circuit (40) will be turned on and both the power transistor (41) and the electronic switch (S1) will be turned off to stop charging to the battery (13), thus protecting the battery (13) from being over-charged.

When the AC to DC power supply is charging to the battery (13), the AC to DC power supply also supplies power to the driving unit (70) through a second switch (32) for activating the LED lighting module (60).

The output voltage of the battery (13) can be used as the DC output voltage (DC 12V) output from the power output ode (Vout) or supplies to an external DC to AC converter for generation of an AC voltage.

The over-discharge protecting circuit (50) also senses and monitors the output voltage of the battery (13) to prevent the battery (13) from being over-discharged. When the output voltage of the battery (13) is normal, the third zener diode (ZD3) is turned on and the coil of the second relay is excited. The third and fourth switches (511)(512) are in a conducted status and the battery (13) can normally output its voltage. When the output voltage of the battery (13) is lower than a low threshold such as 11 volts, the third zener diode (ZD3) is turned off, the exciting to the coil of the second relay is stopped and the two switches (511)(512) return to a open status. The battery (13) thus stops its power outputting to avoid any damage resulting from over-discharge.

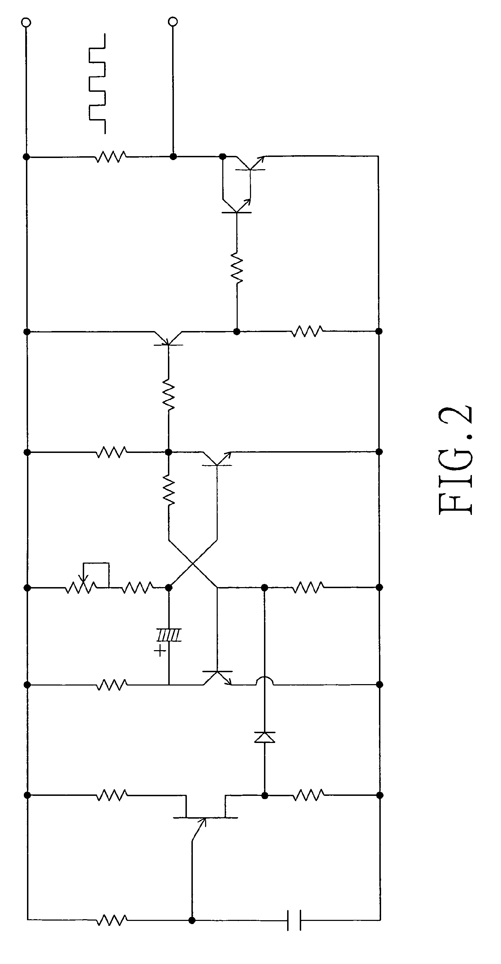

With reference to Fig. 2, the DC/DC converter (12) of the solar module uses an on-off charging approach to quickly charge the battery (13) and avoid the problem of over-charging, whereby the use life of the battery (13) can be extended.

## Claims

1. A solar power system **characterized by** comprising:
a solar module comprising
a solar panel (11) to convert outdoor light to electricity and generating an output voltage;
a DC/DC converter (12) to convert the electricity to a DC voltage; and
a battery (13) charged by the DC voltage and generating an output voltage;
a photo sensor (20) connected to the solar panel (11) to sense whether the output voltage of the solar panel (11) is higher than a normal level and determine whether the outdoor light is sufficient for operation of the solar panel (11);
a switching unit (30) controlled by the photo sensor (20) and comprising
a first switch (31) for selectively connecting the battery (13) to the solar panel (11) or an external power supply when the battery (13) is charged by the solar panel (11) or the external power supply; and
a second switch (32) for connecting the battery (13) to a load when the battery (13) supplies its output voltage to the load;
a sensing and protecting circuit (40) connected to battery (13) and a control terminal of an electronic switch (S1) that is connected between the external power supply and the switching unit (30), the sensing and protecting circuit (40) sensing whether or not the battery (13) is over-charged by the external power supply and disconnecting the battery (13) from the external power supply when the battery (13) is over-charged; and
an over-discharging protecting circuit (50) connected to the battery (13) and comprising a limiting switch (51), the limiting switch (51) being connected between the battery (13) and the load, the over-discharging protecting circuit (50) stopping the battery (13) from supplying power to the load when the output voltage of the battery (13) is lower than a low threshold.

2. The solar power system as claimed in claim 1, the battery (13) connecting to a driving unit (70) through the limiting switch (51), and the driving unit (70) comprising a driving circuit (71) and a constant current circuit (72) to provide a constant current to the load.

3. The solar power system as claimed in claim 1, the photo sensor (20) comprising:
a first transistor (Q1) having a base connected to a first zener diode (ZD1) that is connected to the solar panel (11), and having a collector and an emitter; and
a second transistor (Q2) connected to the collector and the emitter of the first transistor (Q1), and having an collector connected to switching unit (30).

4. The solar power system as claimed in claim 3, the switching unit (30) further comprising:
a first relay with a coil that is connected to the photo sensor (20);
the first switch (31) having a common terminal connected to the DC/DC converter, a normal-open node connected to the solar panel (11) and a normal-close node connected to the external power supply through the electronic switch (S1); and
the second switch (32) having a common terminal connected to the battery (13), a normal-close node connected to the load through the limiting switch (51) and a normal-open node being left floating.

5. The solar power system as claimed in claim 4, the sensing and protecting circuit:
a power transistor (41) having a gate connected to a resistor and a third zener diode (ZD3), the resistor and the third zener diode (ZD3) respectively connected to two ends of the battery (13); and
a transformer (42) having a primary side connected to a drain of the power transistor (41) and a secondary side connected to the control terminal of the electronic switch (S1).

6. The solar power system as claimed in claim 5, wherein the electronic switch is a SCR (S1) having a control gate as the control terminal for connecting to the sensing and protecting circuit (40), and having an anode and a cathode connected respectively to the external power supply and the first switch (31).

7. The solar power system as claimed in claim 1, the over-discharging protecting circuit (50) comprising:
a third transistor (Q3) having a base connected to the battery (13) through a third zener diode (ZD3) and having an emitter and a collector; and
a fourth transistor (Q4) connected to the emitter and the collector of the third transistor (Q3) and having a collector connected to the limiting switch (51).

8. The solar power system as claimed in claim 7, the limiting switch (51) comprising:
a second relay having a third switch (511), a fourth switch (512) and a coil;
the third switch (511) being connected to the second switch (32) of the switching unit (30);
the fourth switch (512) being connected between the battery (13) and a power output node (Vout); and
the coil being connected to the over-discharging protecting circuit (50).

9. The solar power system as claimed in claim 2, wherein the load is a LED lighting module (60).

10. The solar power system as claimed in claim 1, wherein the battery (13) is connected to an external DC/AC converter through the limiting switch (51) and the external DC/AC converter converts the output voltage of the battery to an AC voltage.
